# EUROPEAN PATENT SPECIFICATION

(11) **EP 1 463 354 B1**
(45) Date of publication and mention of the grant of the patent: **07.12.2005**
(21) Application number: 04100977.0
(22) Date of filing: 10.03.2004
(51) Int. Cl.: H04Q 7/34, G08G 1/01

(54) **Method for monitoring traffic flows of mobile users**
Verfahren zum Überwachen des Verkehrsflusses mobiler Nutzer
Procédé de surveillance du flux de trafic des utilisateurs mobiles

(30) Priority: 26.03.2003 FI 20030455
(43) Date of publication of application: 29.09.2004
(73) Proprietor: TeliaSonera Finland Oyj, 00510 Helsinki (FI)
(72) Inventor: Keski-Heikkilä, Mika, 00810, Helsinki (FI); Karhu, Pekka, 00330, Helsinki (FI)
(74) Representative: Äkräs, Tapio Juhani

(56) References cited:
- WO-A-03/024132
- DE-A- 10 110 434
- US-A1- 2003 014 180
- US-B2- 6 505 114

## Description

### FIELD OF THE INVENTION

The present invention relates to telecommunications and especially to an arrangement for monitoring traffic flows of mobile users, a method for monitoring traffic flows of mobile users, and a server in an arrangement for monitoring traffic flows of mobile users.

### BACKGROUND OF THE INVENTION

As the market penetration of mobile communication devices has increased, the idea of monitoring traffic flows of people on the move by monitoring the traffic flows of mobile users (subscribers of mobile communications system) has become a very promising area of interest. At the same time, the technical solutions and implementations on location determination services have evolved, and clear progress is shown in means for offering the monitored information to the mobile users.

One art of monitored traffic flows is vehicular traffic along the roadways. The generic prior art method for monitoring traffic on the roads comprises the use of magnetic sensors, infrared radiation sensors, radar sensors or equal placed along the roadway. However, such mechanisms involve a lot of equipment with installations and maintenance. Furthermore, for centralized information management, such traffic sensors require a communication network for delivering the data from individual measurement points to the central database. The costs of such a system typically do not support centralized traffic monitoring that covers large areas.

US patent 5,465,289 discloses a system where this traditional solution of traffic monitoring has been somewhat improved. Instead of a great number of sensors along the roadways, the solution proposes providing vehicular traffic information by placing around the cellular coverage a number of traffic sensors provided with antennas to monitor the RF transactions between the mobile units and base stations within their reach. Especially transmissions related to call initiations or cell handovers are monitored. By making calculations on the amounts of these transactions, the traffic monitors are able to determine the vehicle count and flow rate of the traffic. Though the number of traffic sensors can thereby be considerably reduced, the solution still requires the installation of separate sensor elements into the field.

Publication WO 01/01367 A1 discloses a more advanced method of road traffic monitoring, wherein transitions of mobile telephones between cells of a mobile telephone network are monitored, and said transitions are correlated to the movement of road traffic along highways passing through said cells. The particular sequence of cells is characteristic of a particular highway, and thus by monitoring the sequence of cells through which a particular telephone passes indicates the route of the mobile user, and the progress through that sequence indicates the speed of the mobile user. This speed can be considered to represent the general flow of the traffic on that particular road. The monitoring is essentially based on location data of one or more identified mobile users. Essentially, with this arrangement only the progress of the identified target mobile stations can be monitored, no actual traffic flow information of the mobile users, such as the number of users in a specific area, or statistics on the communication activities of the mobile users, is thereby available.

Publication EP 081 666 A2 discloses a method for collecting data for a geographic database wherein the determined location information of one or more cellular phones is collected into a database and matched to the location information of the roads in a geographic area. The document proposes using the matched data output for traffic monitoring by observing the clusters of cellular phones, determining thereby the amount of traffic. Furthermore, the rate of travel can be determined by series of positions of each of the cellular phones. The solution is based on utilizing the location information of identified cellular phones, this time determined by a cellular phone location determining system. The solution is well applicable for detecting clusters and anomalies in the road traffic flows, but provides a view to the behaviour of active terminals only. Actual traffic flow information of the mobile users, which would also include the users of idle and stationary mobile stations, is not generated thereby.

Document WO 03/024132 A1 discloses a solution for providing traffic information using operational data of a wireless network. The system administrator configures a traffic system to determine travel times and velocities between defined geographical spots.

Document DE 101 10 434 A1 discloses a solution where a traffic report is established for a defined route section on the basis of the position data of mobile radiotelephone users who have their mobile radiotelephones switched on and of traffic information that comprise for example the routing and the average speeds allowed on said routing. On the basis of this information improved traffic reports can be made available to the public via the radio or individual information can be individually determined and requested by the mobile radiotelephone user.

A mobile communications system generates information on the network activities of the mobile users, but the integration of the identity of the mobile users and the location data introduces a privacy aspect that limits the applicability of such arrangements in wider use. Typically, the procedure for location determination is initiated and thereby authorized by the mobile station, and the location information submitted in this way can basically be considered available for the purposes of other services as well. Offering this information in some form outside the operator system is, however, likely to be objected by the mobile users. Furthermore, cellular activities other than the user-initiated individual location determination by the mobile stations are very strictly regulated to be treated even more confidentially. The utilization of general cellular activities on a smaller scale is possible as long as it is possible to settle the privacy issues with permissions from the individual subscribers to monitor their movements . However, the implementation of external traffic monitoring on a larger scale in such a way is not realistic because the number of permissions to be applied would be excessive.

### BRIEF DESCRIPTION OF THE INVENTION

It is thus an object of the present invention to provide a method and an apparatus to facilitate monitoring temporary traffic flows of subscribers of mobile communications system (mobile users) based on normal cellular operations without compromising the privacy of the individual subscribers. The object of the invention is achieved by a method and an arrangement, which are characterized by what is stated in the independent claims 1, 21, 23, and 24. The preferred embodiments of the invention are disclosed in the dependent claims.

The invention is based on the idea of utilizing the existing data ticket stream from the mobile communications network into a traffic monitoring system integrated to the mobile communications network. Connected to the traffic monitoring system of the operator is a measurement server that provides a connection to a number of external clients. The measurement server forms a measurement criterion based on the requests from the external clients, and forwards it to the traffic monitoring system. From the stream of received data tickets, a group of tickets related to the activities of the mobile users is extracted according to the defined measurement criterion. The extracted data tickets are processed into a measurement result for a defined location in a defined time. Based on this measurement result, the traffic flows of mobile users in one or more defined areas of interest can be monitored.

An advantage of the method and arrangement of the invention is that the existing data stream comprising mobile user activities can be utilized for external monitoring of traffic flows of mobile users in one or more defined areas of interest and still the privacy of the subscribers' confidential information can be maintained.

### BRIEF DESCRIPTION OF THE DRAWINGS

In the following the invention will be described in greater detail by means of preferred embodiments with reference to the attached drawings, in which
Figure 1 shows the basic logical elements of the solution according to the invention;
Figure 2 illustrates an embodiment of the information transfer procedure in the arrangement according to Figure 1;
Figure 3 illustrates the setup of the monitoring action;
Figure 4 illustrates an embodiment of the invented solution;
Figure 5 illustrates a specific measurement arrangement in an embodiment of the invention;
Figure 6 illustrates an embodiment of the invented solution;
Figure 7a shows the display of monitored data on a small screen.
Figure 7b shows the display of the monitored data when the mapping information in the message is integrated to an actual map stored in the mobile station,
Figure 8 shows elements of a server according to the invention.

### DETAILED DESCRIPTION OF THE INVENTION

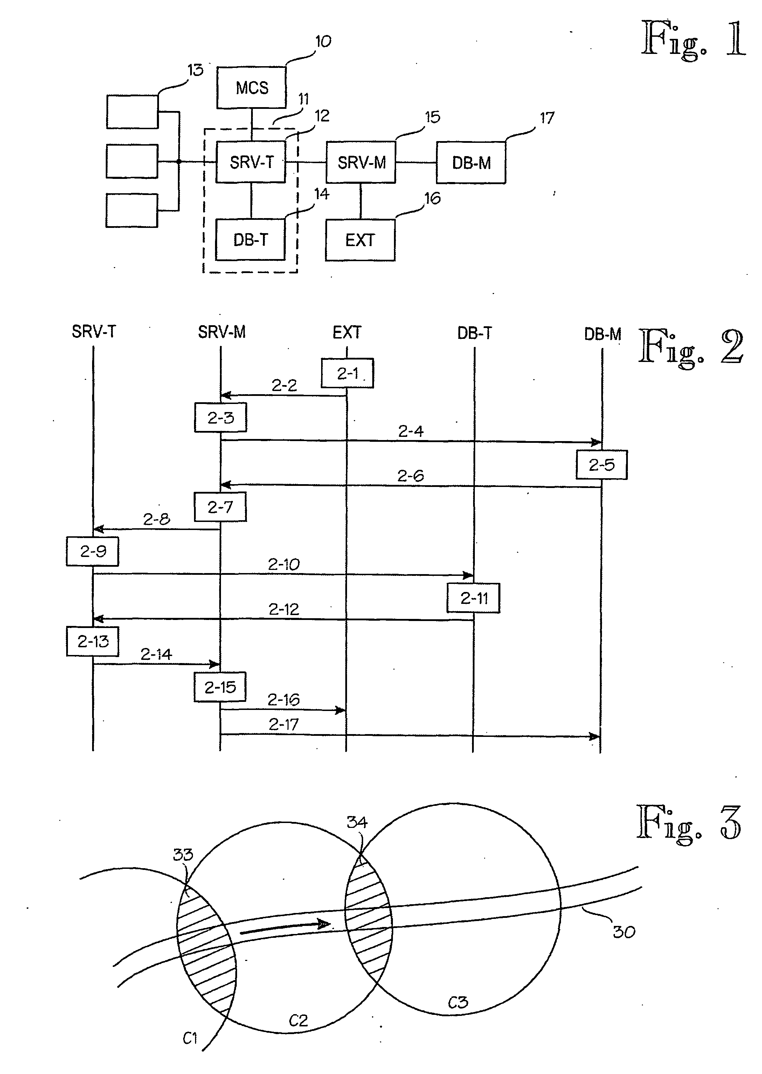

Figure 1 shows the basic logical elements of the solution according to the invention. Mobile communications system 10 refers generally to any telecommunications system wherein the access point (essentially wireless access) to the system can change when users are moving within the service area of the system. A typical mobile communications system is a Public Land Mobile Network (PLMN). Often the mobile communications network is an access network providing a user with a wireless access to external networks, hosts, or services offered by specific service providers. In the following, the invention will be described using the terms and elements of the GSM mobile communications system (Global System for Mobile Communications, GSM), but the invention may be applied in connection of any other cellular mobile communications system whe rein traffic report data elements are generated. Examples of such systems are PCS (Personal Communication System) and DCS 1800 (Digital Cellular System for 1800 MHz), TETRA (Terrestrial Trunked Radio), and third generation mobile systems, such as UMTS (Universal Mobile Communication System) and IMT-2000 (International Mobile Telecommunication System 2000). The invention can also be applied to fixed systems, for example to the PSTN (Public Switched Telephone Network), local area networks, and wide area networks.

Elements of advanced cellular systems in operation generate a plurality of traffic report data elements that are transferred within the network, substantially via signalling, for utilisation in operations or for storing them to be used in further processes. Such systems typically comprise an integrated network management system that operates on the information streams of the traffic report data elements, and provides processes for controlling, monitoring and recording the data to be used by the operating and maintenance personnel. A traffic monitoring system 11 integrated to the mobile communications system 10 illustrates a logical entity that is integrated to the mobile communications system (MCS) 10 and receives traffic report information elements from the mobile communications system 10. Examples of such a traffic monitoring system are Network Management Systems (NMS), or a subsystem of NMS provided for viewing the network performance from the subscriber's perspective. The traffic monitoring system 11 comprises a traffic server (SRV-T) 12 for receiving the traffic report tickets from the mobile communications system 10, for processing the received data tickets into measurement results, and for outputting the processed measurement results to one or more clients 13, essentially monitoring workstations. The traffic monitoring system 11 also comprises one or more traffic databases (DB-T) 14 for storing the received traffic report tickets. The interface towards the unit responsible for the operation and maintenance procedures is typically not specified by standards, and thus the logical units and their practical implementations in separate computer units may vary between equipment suppliers. It should be noted that the actual division of the described functionalities into individual computer units is, as such, not essential to the invention.

In this embodiment, the traffic monitoring system 11 is a subsystem of NMS provided for viewing the network performance from the subscriber's perspective. It collects Real-Time Traffic (RTT) reports from the elements of the mobile communications system 10, and allows the operation and maintenance personnel, the marketing personnel, the network planning and engineering staff, and the customer care of the operator to receive real-time traffic information on network operations into their workstations. Based on the confidentiality issues, providing such a workstation to an external party to be used for monitoring the traffic flows of users of the mobile communications network, is not possible. In the solution according to the present invention, a network element measurement server (SRV-M) 15 is connected to the traffic monitoring system 11, essentially to the traffic server 12. This measurement server 15 provides an interface to one or more external clients (EXT) 16 administered by the customers. The measurement server 15 receives initial measurement requests from the customer's client 16 and outputs the final measurement results to the customer's client 16. The connection between the measurement server and the external clients is preferably a Wide Area Network (WAN) connection, but any other connection types comprising a Local Area Network (LAN), E1, and fixed connections are possible.

In setting up the measurement service, the operator and the client essentially agree on the type of information available for external use, and confirm the level of confidentiality. Based on the received measurement request, the measurement server 15 is configured to generate a measurement criterion that is supplied to the traffic monitoring system 11. Based on the received measurement criterion, the traffic monitoring system 11, essentially the traffic server 12, extracts from the mass of RTT reports the reports that are relevant for the requested results, processes from the extracted information measurement information, and outputs it to the measurement server 15.

An essential phase of the above-mentioned processing is that the identity information of individual mobile subscribers is made unavailable. In its simplest form this processing comprises deleting in each of the records the data fields that would unintentionally associate the record with the subscriber's identity. Some other means of processing the identity information are described later in this document. The term unintentional in this context expresses that after the processing the association between the record and the mobile user is not available unless specially requested, i.e. it is used to make a distinction to the cases, where the identity information of a mobile user is intentionally, by authorisation of the mobile subscriber, made available for external use, for example in order to facilitate some subscriber-specific service. This specific option is also described in more detail later in this document.

The measurement server 15 processes the received measurement information into a measurement result and transfers it to the external client 16. The measurement server 15 is also connected to a measurement database (DB-M) 17 wherein the measurement information and/or measurement results are stored for further usage.

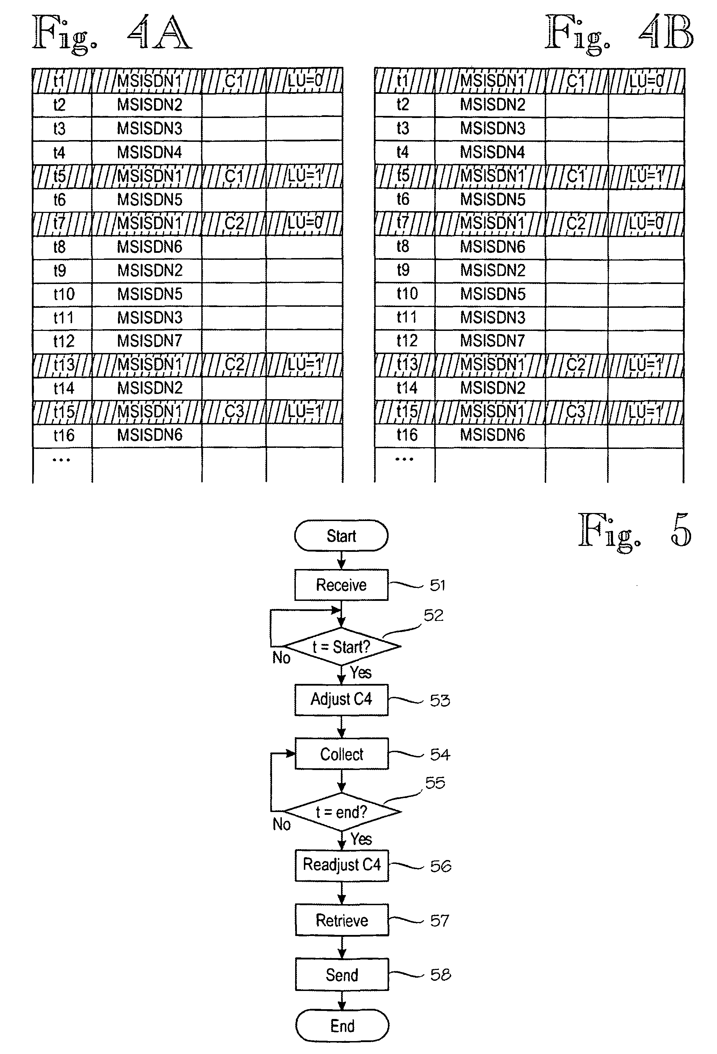

In Figure 2, an embodiment of the information transfer procedure in the arrangement according to Figure 1 is illustrated using a basic example of monitoring the road traffic in the area between two cells. Figure 3 illustrates the setup of the monitoring action. As shown in Figure 3, a road 30 passing between cell C1 and C2 will create location updates by mobile users in the area 33 where the cells intersect. Calculating the rate of location updates from the first cell C1 to the second cell C2 indicates the traffic on the road in the direction marked with an arrow in Figure 3. The external client 16 forms (step 2-1) an initial measurement request that identifies the measurement results required by the customer. The data fields of the measurement request comprise:
- *start time* for indicating the starting point for the measurement
- *end time* for indicating the ending point for the measurement
- *Req: LU*/*C1-C2* for indicating that the requested measurement data is the monitored number of location updates from cell C1 to cell C2 between *start time* and *end time.*

The measurement request is transferred (step 2-2) to the measurement server 15, which will first check (step 2-3) whether the measurement request relates to data that is readily available by sending a query to the measurement database 17 DB-M (step 2-4). DB-M checks the stored data (step 2-5), and if possible returns it to the measurement server 15 or responds that the requested data is not available (step 2-6). If the requested information is available in the measurement database 17, the information transfer sequence will move directly to step 2-16. Otherwise, the measurement server 15 forms (step 2-7) a measurement criterion that comprises information for identifying the requested measurement information. The data fields of the measurement criterion comprise:
- *start time* for indicating the starting point for the monitoring action
- *end time* for indicating the ending point for the monitoring action
- *req: LU reqs from C1 to C2* for indicating that the requested measurement information is the monitored number of location updates from cell C1 to cell C2 between *start time* and *end time.*

It should be noted that the data fields above are related to the illustrated embodiment only. Upon receiving the measurement criterion (step 2-8), the traffic server 12 checks (step 2-9) whether the measurement criterion is related to information that is readily stored in the traffic database 14 and/or whether new data are to be recorded for the measurement information. For example, if the *start time* and *end time* data elements relate to a time period in the past, the information should be in the traffic database 14. If either or both of the data elements are in future, the server subsystem 12 triggers database retrieval from the traffic database 14 only after the time according to *end time* is elapsed. The traffic server 12 submits a query (step 2-10) to the traffic database 14 that retrieves the requested information (step 2-11) and returns the response (step 2-12) to the traffic server 12. The database retrieval can naturally comprise a sequence of such communications (steps 2-10 to 2-12). When the necessary information is retrieved, the traffic server processes the material into measurement information (step 2-13) and transfers it to the measurement server (step 2-14). The measurement information comprises the same data fields
- *start time* for indicating the starting point for the monitoring action
- *end time* for indicating the ending point for the monitoring action
- *res: LU reqs from C1 to* C2 for indicating the monitored number of location updates from cell C1 to cell C2 in the time between *start time* and *end time*

The measurement server 12 processes the measurement information into a measurement result (step 2-15) and transfers it to the external client (step 2-16). At the same time, the measurement server sends (step 2-17) the measurement information or the measurement result or both to the measurement database 17 (step 2-17).

With the solution described above, a controlled access to the user location information can be provided for an external customer for monitoring the traffic flows of the mobile users. At the same time, a new database that can be utilised like a proxy server is being generated of the stored measurement information received from the traffic monitoring system and/or the measurement results provided to the external client. Thus, for example for a statistical analysis or studying of time series, the measurement procedure in the traffic monitoring side needs not be repeated for every request.

As can be seen from Figure 3, the information on the number of location updates in a defined area will illustrate the number of users passing a certain point, but does not indicate the average speed of the monitored traffic. For confidentiality reasons, submitting the location information of individual mobile users from the traffic monitoring system is avoided, and thus measurements based on following the movement of the individual users are generally not possible. The following embodiment provides a further advantage with a solution to this problem. In the embodiment, the traffic server is configured to extract the traffic reports according to the measurement criteria as described above, and additionally for a certain time period to amend the extracted traffic reports by replacing the user identifier, for example mobile subscriber international ISDN number (MSISDN) or international mobile subscriber identity (IMSI), with a temporary identifier. For example, let us say that a temporary identifier is inserted in all traffic records related to mobile users attached to cells C1, C2, or C3 of Figure 3. Assuming that one temporary identifier is valid at least for a time period during which a car drives from area 33 to 34, it can be well estimated that the mobile user associated with the temporary identifier with a detected location update from cell C1 to C2 and soon from cell C2 to C3 (e.g. when the temporary identifier is still valid) is moving along the road. If the location update from C2 to C3 does not take place before the elapse of the defined time period, here within half an hour, it can be assumed that the mobile station is either not moving along the road or is not moving with the other traffic, and does not need to be considered in the speed calculations. Based on the time stamps of the location update events, the average speed of the mobile user, i.e. the car, can be determined. This temporary identifier will provide a way to trace the events of mobile users during the relatively short period of speed calculations, but does not provide means to trace back the movements of individual mobile users as such.

Figure 4 illustrates this further embodiment of the invented solution. Figure 4 shows a series of simplified traffic report data elements extracted from the traffic database using the measurement criteria:
- *start time* < timestamp < *end time*
- Location Area Identifier (LAI) = *C1 or C2 or C3*
Series 4a describes the data as extracted from the traffic database, and series 4b describes amended data for utilisation in the monitoring of user traffic flows. For each MSISDN number a separate temporary identification number TMP is assigned, otherwise the fields in the traffic report data element remain essentially untouched. From confidentiality point of view, the amended data may be transferred to the measurement server 15 already in this form, or the traffic server 12 may be configured to process the data further before transferring it to the measurement server 15. In Figure 4, the records related to mobile user MSISDN1 are highlighted for easier reference. At t1, the mobile user MSISDN1 is involved in a signalling activity but no location update takes place. At t5, the mobile user MSISDN1 moves from cell C1 to C2. AT t7, the mobile user MSISDN1 is again involved in a signalling activity but no location update takes place. At t13, the mobile user MSISDN1 makes a location update from cell C2 to C3, and finally at t15, the mobile user MSISDN1 makes a location update from cell C3 and does not show anymore in the extracted records. From the records it can be determined that the mobile user TMP1 is moving along the road 30 and its average speed can be estimated by dividing the distance between areas 33 and 34 by the time difference between time stamps t13 and t5.

In some cases, the interest does not only relate to the actions of the users on the move, but also to the presence of mobile users, typically in a particular area at some particular moment. In such a case, the traffic information collected from spontaneous signalling events may not provide enough information to monitor the idle and/or static users, since they do not generate much signalling traffic to the network. This problem can be solved with a further embodiment of the present invention. In the embodiment, the amount of traffic information is dynamically managed by controlling one or more cell parameters in the area of interest.

For example, the interval of a periodic location update is a cell parameter that may be set individually for each cell. During normal network operation, this parameter is typically set to values in the order of several hours. Let us assume that a shopping centre is located within a cell C4 and the management of the shopping centre is interested in monitoring the flows of shoppers in and around the shopping centre. With the invented solution this is easily accomplished by providing them the measurement results on the number of location updates within cell C4 at different times. According to the further embodiment, the measurement criterion from the measurement server to the traffic monitoring system this time comprises an additional request to adjust the timer of the periodic location update in cell C4 to a value that is essentially shorter than the original value, and after the monitoring period to re-adjust the timer of the periodic location update to the original value. The specific measurement arrangement of this embodiment is illustrated with the flow chart of Figure 5, the other steps follow the procedure as outlined in Figure 2.

In step 51, the server subsystem receives the measurement - criterion from the measurements server, said measurement criterion comprises the data fields:
- *start time* for indicating the starting point for the monitoring action
- *end time* for indicating the ending point for the monitoring action
- *cell: C4* for indicating the cell to be monitored
- *LU period* = *(t2-t1)*/*2* for indicating the temporary interval for location updates during the monitoring

The temporary interval is chosen here to be half of the duration of the monitoring action in order to have each mobile station to update its location at least once during the monitoring action, but may be chosen according to the implementation. At moment *start time* (step 52), the traffic monitoring system, as part of the network management system, will carry out the procedure for adjusting the parameter for the interval of a periodic location update (step 53). The remote adjustment of cell parameters is a system specific procedure, and well known in the art. After the parameter setting, the traffic reports from cell C4 are collected (step 54) until the moment *end time* is reached (step 55). After the monitoring action, the parameter is readjusted to the normal value (step 56) and the measurement information is retrieved from the traffic database (step 57). The retrieved data is forwarded to the measurement server for further processing (step 58). In order to produce statistics, the above-mentioned procedure merely needs to be repeated at defined intervals.

Even though the invention is based on using the inherent signalling information for creating traffic information on mobile users, the information from the realised location determinations can naturally be utilised in monitoring the mobile users as any other traffic information from the network. For example, the location of the users, whose mobile terminal does not support the advanced location determination techniques, is typically indicated with the value of the mass centre of the cell the user is registered to. But as a parameter based on the network planning definitions on the air interface, the mass centre describes essentially the physical dimensions of the cell, not the actual location of the mobile users. An embodiment of the present invention provides a further advantage by allowing the definition of a traffic mass centre of the cell. The definition is based on the information on the location determinations of the users within a defined cell, collected from the traffic reports as described above in Figure 2. Using this defined traffic mass centre instead of the physical mass centre of the cell, the accuracy of the estimations on the location of the users carrying mobile terminals that do not support the advanced location determination techniques is considerably improved.

In this embodiment, the measurement criterion from the measurements server comprises the data fields
- *start time* for indicating the starting point for the monitoring action
- *end time* for indicating the ending point for the monitoring action
- *cell: C5* for indicating the cell to be monitored
- *L-crd* for indicating that the coordinates from the detected location determinations should be included in the measurement information
The behavioural mass centre of the cell may be defined as an average of the coordinates detected during the monitoring action. Other steps of the monitoring follow the procedures described above and will not be repeated here.

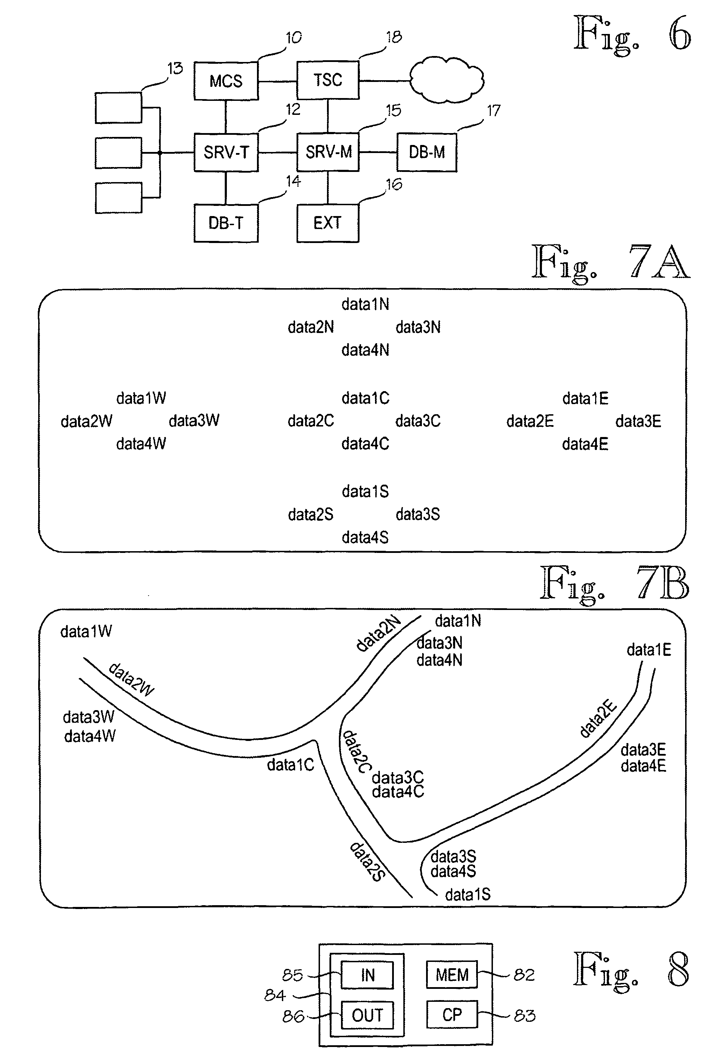

In providing information on traffic flows to the mobile users, there is the problem that the transmission of information is typically triggered by the location determination of the mobile subscriber, and therefore sometimes reaches the user too late. For example, information indicating that a specific road is severely blocked is not valuable anymore to a subscriber who is already standing in the queue. An embodiment of the invention provides a further advantage by providing means for offering the results of the monitoring actions for end users as an additional service during operation. In the arrangement of Figure, 1 the results are provided to the connected external clients through the interface of the measurement server. To the embodiment shown in Figure 6, another system element, a traffic service centre (TSC) 18 has been added. The traffic service centre 18 is connected to the measurement server 15 in a similar manner as the external clients 16, and is therefore configured to output measurement requests to the measurement server 15 and to receive the requested measurement results from the measurement server 15. The connection between the measurement server 15 and the traffic service 18 centre is preferably a Wide Area Network (WAN) connection, but any other connection types comprising a Local Area Network (LAN), E1, and fixed connections are possible. The traffic service centre 18 is also connected to the mobile communications network 10 for receiving information from the mobile users, and for sending information to the mobile users via the mobile communications network 10. The traffic service centre 18 is also connected to other external databases 19 for collecting information that may be integrated to the measurement results from the measurement server 15.

The traffic service centre 18 comprises a set of measurements that are considered to be of importance within the area of a cell, and is configured to implement these measurements at defined moments of time. Let us examine an example where a mobile user has authorised a service provider to utilise his network actions in order to improve the accuracy of the services offered to him. For profiling the mobile user, the traffic service centre 18 will implement a measurement wherein all the location updates of this mobile user are collected as a measurement result with the procedure described above. By further following the location updates between 4 p.m. and 6 p.m. at weekdays, it is detected that on most of the weekdays the mobile users makes consecutive location updates from cell C1 to C2 and from C2 to C3 (Figure 2). This implies that at that time the mobile user is typically returning home from the office and is likely to be interested in the traffic situation on the road. In case alternative routes exist, such routes are equally interesting to the mobile user at some time before the trip actually begins. The traffic service centre in this embodiment is thus configured to determine the relevant information for that mobile user, here the information of road traffic along his way home at a certain time of the day, and to provide this information to him via the mobile communications network

The GSM system comprises a point-to-omnipoint cell broadcast channel (CBCH) that allows the operator to simultaneously transmit messages to a number of mobile users within one cell. CBCH is transmitted in the downlink direction and the mobile stations do not acknowledge the messages. The measurement result from the measurement database may also be processed into a measurement broadcast message that is delivered to the mobile users over the CBCH. In case the service is charged, the message is delivered to the mobile users in encrypted format, and the mobile users may receive the valid encryption keys against payment. The delivery of information via the CBCH is advantageous from the capacity point of view, but naturally other methods of message transmission are possible, including point-to-point messaging like Short Message Service (SMS), Instant Messaging service (IMS), WAP, email and equal.

In the delivery of information on traffic flows of mobile users, the format used in displaying the information is also important. For example in monitoring traffic on the roads, the information is best visualised if the information is logically situated in appropriate locations on the display screen. This is especially important when the display is limited, for example due to the size of the screen, or the availability of contrasts or colours. As a further advantage, a solution to the problem of displaying the area information on the screen is proposed by another embodiment of the invention. The steps of acquiring the measurement results to the traffic service centre 18 are as described above in Figure 2. The received exemplary measurement result to the traffic service centre 18 comprises a series of consecutive data elements:
- *timestamp* for indicating the time of the monitoring action,
- *data1* for information on the first collected information type,
- *data2* for information on the second collected information type,
- *data3* for information on the third collected information type,
- *data4* for information on the fourth collected information type,
- *coord* for indicating the location of the monitoring action.
Said data types relate to monitored actions like average speed, average amount of mobile users in the area, and average density of mobile users in the area. As stated above, some of the information can be received from the external databases 19, and integrated together with the measurement results in the traffic service centre 18.

For logical displaying of the information, the traffic service centre 18 maps the co-ordinates of the monitoring action into co-ordinates of the display, and includes this mapping information into the message sent to the mobile stations. In the example above, let us further assume that the display provides coordinates for the current location, and for four locations to the north, south, east and west of the current location. Thus, the corresponding message from the traffic service centre to the mobile station permutates into data fields:
- *timestamp* for indicating the time of the monitoring action,
- *data1C* for information on the first collected information type in the current location,
- *data2C* for information on the second collected information type in the current location,
- *data3C* for information on the third collected information type in the current location,
- *data4C* for information on the fourth collected information type in the current location,
- *data1N* for information on the first collected information type in the location in a defined coordinate north from the current location,
- *data2N* for information on the second collected information type in the location in a defined coordinate north from the current location,
- *data3N* for information on the third collected information type in the location in a defined coordinate north from the current location,
- *data4N* for information on the fourth collected information type in the location in a defined coordinate north from the current location,
- *data1S* for information on the first collected information type in the location in a defined coordinate south from the current location,
- *data2S* for information on the second collected information type in the location in a defined coordinate south from the current location,
- *data3S* for information on the third collected information type in the location in a defined coordinate south from the current location,
- *data4S* for information on the fourth collected information type in the location in a defined coordinate south from the current location,
- *data1E* for information on the first collected information type in the location in a defined coordinate east from the current location,
- *data2E* for information on the second collected information type in the location in a defined coordinate east from the current location,
- *data3E* for information on the third collected information type in the location in a defined coordinate east from the current location,
- *data4E* for information on the fourth collected information type in the location in a defined coordinate east from the current location,
- *data1W* for information on the first collected information type in the location in a defined coordinate west from the current location,
- *data2W* for information on the second collected information type in the location in a defined coordinate west from the current location,
- *data3W* for information on the third collected information type in the location in a defined coordinate west from the current location,
- *data4W* for information on the fourth collected information type in the location in a defined coordinate west from the current location,
Based on the mapping information, the receiving mobile station is able to print the data elements into the appropriate locations on the screen. In Figure 7a the display comprising the exemplary data fields is shown on a small screen.

In Figure 7b is shown the display of the same message, when the mapping information in the message is integrated to an actual map stored in the mobile station, and shown within a whole context. In this way, easy viewing of the information on traffic flows is facilitated on different types of screens.

Figure 8 schematically illustrates the basic elements of a server according to the present invention. The unit comprises processing means 83, an element that comprises an arithmetic logic unit, a number of special registers and control circuits. Connected to the processing means are memory means 82, a data medium where computer-readable data or programs, or user data can be stored. The memory means typically comprise memory units that allow both reading and writing (RAM), and a memory whose contents can only be read (ROM). The unit also comprises an interface block 84 with input means 85 for inputting data for the internal processes of the unit, and output means 86 for outputting data from the internal processes of the unit. Examples of said input means comprise a plug-in unit acting as a gateway for the information delivered to its external connection points, a keypad, or a touch screen, a microphone, or equal. Examples of said output means comprise a plug-in unit feeding information to the lines connected to its external connection points, a screen, a touch screen, a loudspeaker, or equal. The processing means 83, memory means 82, and interface block 84 are electrically interconnected for performing systematic execution of operations on the received and/or stored data according to the configured, essentially programmed processes of the unit. In a solution according to the invention, the operations comprise the invented functionality as described above.

It will be obvious to a person skilled in the art that, as the technology advances, the inventive concept can be implemented in various ways. The invention and its embodiments are not limited to the examples described above but may vary within the scope of the claims.

## Claims

1. An arrangement for monitoring traffic flows of mobile users, comprising
a first server (12) connected to a mobile communications network for receiving traffic report tickets generated from signalling activities of the mobile communications network, each traffic repord ticket comprising a plurality of datafields; **characterized by**
a second server (15) connected to the first server, and configured to generate (2-7) a first message comprising a measurement criterion that identifies information requested from the first server, and to send (2-8) said first message to the first server;
the first server (12) being configured to extract (2-10, 2-11, 2-12) from the received traffic report tickets a first group of traffic report tickets according to the measurement criterion in the first message received from the second server (15);
the first server (12) is configured to generate (2-13) from the first group of traffic tickets a first result by manipulating in at least said first group of traffic tickets the data fields that unintentionally facilitate associating a mobile user to a specific traffic ticket, and to send (2-14) the first result to the second server (15).

2. An arrangement according to claim 1, **characterized in that** the second server (15) comprises means (84) for providing a connection to an external client (16) and is configured to
receive (2-2) from the external client (16) a request message that identifies a result requested from the second server (15);
generate (2-7) from the request message said first message;
receive (2-14) from the first server (12) the first result;
generate (2-15) from the received first result a second result according to the request by the external client (16);
send (2-16) said second result to the external client (16).

3. An arrangement according to claim 1, **characterized in that**
the second server (15) is configured to include in the first message a value for a data field that corresponds to a data field in the traffic report tickets, and the first server (12) is configured to extract the received traffic report tickets wherein a value of the data field corresponds to the value for the data field in the first message.

4. An arrangement according to claim 1, **characterized in that**
the second server (15) is configured to include in a data field of the first message a condition indicating possible values for a corresponding data field in the received traffic report tickets; and
the first server (12) is configured to extract the received traffic repord tickets wherein a value of the data field meets the condition in the first message.

5. An arrangement according to claim 1, **characterized in that** the arrangement further comprises a measurement database (17) connected to the second server (15), and the second server (15) is further configured to store (2-17) the received first result in the measurement database (17).

6. An arrangement according to claim 2, **characterized in that** the arrangement further comprises a measurement database (17) connected to the second server (15), and the second server (15) is further configured to store the sent second message in the measurement database (17).

7. An arrangement according to claim 1, **characterized in that** the first server is configured to manipulate the data fields that unintentionally facilitate associating a mobile user to a specific traffic ticket by replacing an identifier of permanent user identity (MSISDN1) with a temporary identifier (TMP1) that is valid for a defined period only.

8. An arrangement according to claim 7, wherein each of the traffic tickets comprises a data field carrying the timestamp (t1, t2, ...) of the signalling activity, **characterized in that** the first server (12) is further configured to detect manipulated traffic tickets with one temporary identifier (TMP1), determine by the timestamps (t1, t5) a time difference between two signalling activities, and utilize the time difference for calculating the average speed of the mobile station of that temporary identifier.

9. An arrangement according to claim 7, wherein each record of the first result comprises a data field carrying the timestamp of the signalling activity, **characterized in that** the second server (15) is further configured to detect from the received first result two records related to one temporary identifier (TMP1), determine by the timestamps (t1, t5) the time difference between the signalling activities, and utilize the time differences for calculating the average speed of the mobile station of that temporary identifier (TMP1).

10. An arrangement according to claim 1, **characterized in that**
the first server (12) comprises means (82, 83, 84) for adjusting cell parameters of individual cells of the mobile communications system (10);
the first server (12) is configured to determine from the first message a need to adjust a cell parameter of one or more cells of the mobile communications system; and
the first server (12) is configured to adjust a cell parameter of said one or more cells in response to the determined need for the adjustment.

11. An arrangement according to claim 10, **characterized in that** the first server (12) is configured to adjust the cell parameter of the timer of the location update.

12. An arrangement according to claim 5 or 6, **characterized in that** the second server (15) is configured to retrieve from the measurement database (17) a group of records of signalling activities related to location determination by the mobile stations in one cell for calculating the probabilistic mass centre of the cell.

13. An arrangement according to claim 2, **characterized in that** the arrangement further comprises a third server (18) that is connected to the second server (15) and to the mobile communications network (10), and the first server (12) is configured to not to manipulate traffic tickets of mobile users that have authorised the use of their traffic report tickets, generated from signalling activities of the mobile communications network (10), in the third server.

14. An arrangement according to claim 13, **characterized in that** the third server (18) is configured to request from the second server (15) a result comprising a group of records related to a subscriber, determine from the result a point of service activation for the subscriber, and activate a service of the mobile communications network (10) at that point.

15. An arrangement according to claim 14, **characterized in that** the point of service is a defined location.

16. An arrangement according to claim 14, **characterized in that** the point of service is a defined time of day.

17. An arrangement according to claim 14, **characterized in that** the service is a point-to-point service.

18. An arrangement according to claim 14, **characterized in that** the service is a point-to-omnipoint service using the cell broadcast channel (CBCH).

19. An arrangement according to claim 18, **characterized in that** the service comprises sending of a message, and the third server (18) is configured to encrypt the message before sending it.

20. An arrangement according to claim 2, **characterized in that**
the arrangement further comprises a third server (18) that is connected to the second server (15) and to the mobile communications network (10);
said third server (18) is configured to generate from the second result a message to a mobile user carrying a mobile station with a display apparatus, said message comprising one or more data elements; and
said third server (18) is further configured to include in said one or more data elements a coordinate that associates the data element to a location on the display apparatus of the mobile station.

21. A method for monitoring traffic flows of mobile users, the method comprising:
receiving traffic report tickets generated from signalling activities of mobile communications network in a first server (12) connected to a mobile communications network, each traffic repord ticket comprising a plurality of data fields; **characterized by**
receiving (2-8) from a second server a first message comprising a measurement criterion that identifies information that is requested from the first server (12);
extracting (2-10, 2-11, 2-12) in the first server from the received traffic report tickets a first group of traffic report tickets according to the measurement criterion in the first message;
generating (2-13) from the first group of traffic tickets a first result by manipulating in at least said first group of traffic tickets the data fields that unintentionally facilitate associating a mobile user to a specific traffic ticket.

22. A method according to claim 21, **characterized by** receiving (2-2) from an external client (16) a request message that identifies a result requested from the second server;
generating (2-7) from the request message said first message;
receiving (2-14) from the first server the first result;
generating (2-15) from the received first result a second result according to the request by the external client.

23. A server (12) in an arrangement for monitoring traffic flows of mobile users, said server (12) being connected to a mobile communications network (10) for receiving traffic report tickets generated from signalling activities of the mobile communications network, each traffic repord ticket comprising a plurality of data fields, and to a second server (15); and **characterized by** being configured to
receive (2-8) a first message comprising a measurement criterion that identifies information requested by second server (15);
extract (2-10, 2-11,2-12) from the received traffic report tickets a first group of traffic report tickets according to the measurement criterion in the first message; and
generate (2-13) from the first group of traffic tickets a first result by at least manipulating in said first group of traffic tickets the data fields that unintentionally facilitate associating a mobile user to a specific traffic ticket.

24. A server (15) in an arrangement for monitoring traffic flows of mobile users, said server (15) being connected to a first server (12) that is connected to a mobile communications network (10) for receiving traffic report tickets generated from signalling activities of the mobile communications network and to an external client (16), and **characterized by** being configured to
receive (2-2) from the external client (16) a request that identifies a result requested from the server (15);
generate (2-7) from the request a first message comprising a measurement criterion that identifies information requested from the first server, (12), and to send (2-8) said first message to the first server (12);
receive (2-14) from the first server (12) the first result where data fields that unintentionally facilitate associating a mobile user to a specific traffic ticket have been manipulated by the first server;
generate (2-15) from the received first result a second result, according to the request by the external client (16);
send (2-16) said second result to the external client (16).

## Patentansprüche

1. Anordnung zur Überwachung von Verkehrsflüssen von Mobilfunknutzern, mit
einem ersten Server (12), der mit einem Mobilkommunikationsnetz verbunden ist, um Verkehrsberichtsdatenblöcke bzw. -tickets, die aus Signalisierungs- bzw. Zeichengabeaktivitäten des Mobilkommunikationsnetzes erzeugt werden, zu empfangen, wobei jedes Verkehrsberichtsticket eine Mehrzahl von Datenfeldern aufweist; **gekennzeichnet durch**
einen zweiten Server (15), der mit dem ersten Server verbunden ist und konfiguriert ist, um eine erste Nachricht, die ein Messkriterium enthält, welches eine von dem ersten Server angeforderte Information identifiziert, zu erzeugen (2-7) und die erste Nachricht an den ersten Server zu senden (2-8);
wobei der erste Server (12) konfiguriert ist, um aus den empfangenen Verkehrsberichtstickets eine erste Gruppe von Verkehrsberichtstickets gemäß dem Messkriterium in der von dem zweiten Server (15) empfangenen ersten Nachricht zu extrahieren (2-10, 2-11, 2-12);
wobei der erste Server (12) konfiguriert ist, um aus der ersten Gruppe von Verkehrstickets **durch** Manipulieren der Datenfelder, die eine Zuordnung eines Mobilfunknutzers zu einem spezifischen Verkehrsticket unbeabsichtigt erleichtern, in wenigstens der ersten Gruppe von Verkehrstickets ein erstes Ergebnis zu erzeugen (2-13) und das erste Ergebnis an den zweiten Server (15) zu senden (2-14).

2. Anordnung gemäß Anspruch 1, **dadurch gekennzeichnet, dass** der zweite Server (15) eine Einrichtung (84) zum Bereitstellen einer Verbindung zu einem externen Client (16) aufweist und konfiguriert ist, um
von dem externen Client (16) eine Anforderungsnachricht zu empfangen (2-2), welche ein von dem zweiten Server (15) angefordertes Ergebnis identifiziert;
aus der Anforderungsnachricht die erste Nachricht zu erzeugen (2-7);
das erste Ergebnis von dem ersten Server (12) zu empfangen (2-14);
aus dem empfangenen ersten Ergebnis ein zweites Ergebnis gemäß der Anforderung durch den externen Client (16) zu erzeugen (2-15);
das zweite Ergebnis an den externen Client (16) zu senden (2-16).

3. Anordnung gemäß Anspruch 1, **dadurch gekennzeichnet, dass**
der zweite Server (15) konfiguriert ist, um in die erste Nachricht einen Wert für ein Datenfeld einzubinden, der einem Datenfeld in den Verkehrsberichtstickets entspricht, und
der erste Server (12) konfiguriert ist, um die empfangenen Verkehrsberichtstickets zu extrahieren, in denen ein Wert des Datenfeldes dem Wert für das Datenfeld in der ersten Nachricht entspricht.

4. Anordnung gemäß Anspruch 1, **dadurch gekennzeichnet, dass**
der zweite Server (15) konfiguriert ist, um in ein Datenfeld der ersten Nachricht eine Bedingung einzubinden, die mögliche Werte für ein entsprechendes Datenfeld in den empfangenen Verkehrsberichtstickets angibt; und
der erste Server (12) konfiguriert ist, um die empfangenen Verkehrsberichtstickets zu extrahieren, in denen ein Wert des Datenfeldes die Bedingung in der ersten Nachricht erfüllt.

5. Anordnung gemäß Anspruch 1, **dadurch gekennzeichnet, dass** die Anordnung weiter eine Messdatenbank (17) aufweist, die mit dem zweiten Server (15) verbunden ist, und der zweite Server (15) ferner konfiguriert ist, um das empfangene erste Ergebnis in der Messdatenbank (17) zu speichern (2-17).

6. Anordnung gemäß Anspruch 2, **dadurch gekennzeichnet, dass** die Anordnung weiter eine Messdatenbank (17) aufweist, die mit dem zweiten Server (15) verbunden ist, und der zweite Server (15) ferner konfiguriert ist, um die gesendete zweite Nachricht in der Messdatenbank (17) zu speichern.

7. Anordnung gemäß Anspruch 1, **dadurch gekennzeichnet, dass** der erste Server konfiguriert ist, um die Datenfelder, die eine Zuordnung eines Mobilfunknutzers zu einem bestimmten Verkehrsticket unbeabsichtigt erleichtern, durch Ersetzen einer Kennung einer permanenten Nutzeridentität (MSISDN1) durch eine vorübergehende Kennung (TMP1), die nur für eine definierte Zeitdauer gültig ist, zu manipulieren.

8. Anordnung gemäß Anspruch 7, wobei die Verkehrstikkets ein Datenfeld aufweisen, das den Zeitstempel (t1, t2, ...) der Signalisierungsaktivität trägt, **dadurch gekennzeichnet, dass** der erste Server (12) ferner konfiguriert ist, um manipulierte Verkehrstickets mit einer einzigen vorübergehenden Kennung (TMP1) zu erfassen, durch die Zeitstempel (t1, t5) eine Zeitdifferenz zwischen zwei Signalisierungsaktivitäten zu bestimmen und die Zeitdifferenz zur Berechnung der mittleren Geschwindigkeit der Mobilstation dieser vorübergehenden Kennung auszunutzen.

9. Anordnung gemäß Anspruch 7, wobei jeder Datensatz des ersten Ergebnisses ein Datenfeld aufweist, das den Zeitstempel der Signalisierungsaktivität trägt, **dadurch gekennzeichnet, dass** der zweite Server (15) ferner konfiguriert ist, um aus dem empfangenen ersten Ergebnis zwei auf eine einzige vorübergehende Kennung (TMP1) bezogene Datensätze zu erfassen, durch die Zeitstempel (t1, t5) eine Zeitdifferenz zwischen zwei Signalisierungsaktivitäten zu bestimmen und die Zeitdifferenzen zur Berechnung der mittleren Geschwindigkeit der Mobilstation dieser vorübergehenden Kennung (TMP1) auszunutzen.

10. Anordnung gemäß Anspruch 1, **dadurch gekennzeichnet, dass**
der erste Server (12) eine Einrichtung (82, 83, 84) zum Einstelien von Zellenparametern individueller Zellen des Mobilkommunikationssystems (10) aufweist;
der erste Server (12) konfiguriert ist, um aus der ersten Nachricht ein Bedürfnis zur Einstellung eines Zellenparameters einer oder mehrerer Zellen des Mobilkommunikationssystems zu bestimmen; und
der erste Server (12) konfiguriert ist, um einen Zellenparameter der einen oder der mehreren Zellen in Reaktion auf das bestimmte Einstellbedürfnis einzustellen.

11. Anordnung gemäß Anspruch 10, **dadurch gekennzeichnet, dass** der erste Server (12) konfiguriert ist, um die Zellenparameter des Timers bzw. Zeitgebers der Ortsaktualisierung einzustellen.

12. Anordnung gemäß Anspruch 5 oder 6, **dadurch gekennzeichnet, dass** der zweite Server (15) konfiguriert ist, um aus der Messdatenbank (17) eine Gruppe von Datensätzen von Signalisierungsaktivitäten wiederzufinden, die auf eine Ortsbestimmung durch die Mobilstationen in einer Zelle bezogen sind, um das wahrscheinlichkeitstheoretische Massenzentrum der Zelle zu berechnen.

13. Anordnung gemäß Anspruch 2, **dadurch gekennzeichnet, dass** die Anordnung weiter einen dritten Server (18) aufweist, der mit dem zweiten Server (15) und dem Mobilkommunikationsnetz (10) verbunden ist, und der erste Server (12) konfiguriert ist, um in dem dritten Server aus Signalisierungsaktivitäten des Mobilkommunikationsnetzes (10) erzeugte Verkehrstickets von Mobilfunknutzern, welche die Verwendung ihrer Verkehrsberichtstickets autorisiert haben, nicht zu manipulieren.

14. Anordnung gemäß Anspruch 13, **dadurch gekennzeichnet, dass** der dritte Server (18) konfiguriert ist, um von dem zweiten Server (15) ein Ergebnis anzufordern, das eine Gruppe von auf einen Teilnehmer bezogenen Datensätzen enthält, aus dem Ergebnis einen Punkt einer Dienstaktivierung für den Teilnehmer zu bestimmen und einen Dienst des Mobilkommunikationsnetzes (10) an diesem Punkt zu aktivieren.

15. Anordnung gemäß Anspruch 14, **dadurch gekennzeichnet, dass** der Punkt des Dienstes ein definierter Ort ist.

16. Anordnung gemäß Anspruch 14, **dadurch gekennzeichnet, dass** der Punkt des Dienstes eine definierte Tageszeit ist.

17. Anordnung gemäß Anspruch 14, **dadurch gekennzeichnet, dass** der Dienst ein Dienst von Punkt zu Punkt ist.

18. Anordnung gemäß Anspruch 14, **dadurch gekennzeichnet, dass** der Dienst ein Dienst von einem Punkt zu allen Punkten unter Verwendung des Zellenrundrufkanals (CBCH) ist.

19. Anordnung gemäß Anspruch 18, **dadurch gekennzeichnet, dass** der Dienst ein Senden einer Nachricht aufweist und der dritte Server (18) konfiguriert ist, um die Nachricht zu verschlüsseln, bevor sie gesendet wird.

20. Anordnung gemäß Anspruch 2, **dadurch gekennzeichnet, dass**
die Anordnung weiter einen dritten Server (18) aufweist, der mit dem zweiten Server (15) und dem Mobilkommunikationsnetz (10) verbunden ist;
der dritte Server (18) konfiguriert ist, um aus dem zweiten Ergebnis eine Nachricht an einen Mobilfunknutzer, der eine Mobilstation mit einer Anzeigevorrichtung trägt, zu erzeugen, wobei die Nachricht eine oder mehr Datenelemente aufweist; und
der dritte Server (18) ferner konfiguriert ist, um in das eine oder die mehreren Datenelemente eine Koordinate einzubinden, welche das Datenelement einem Ort auf der Anzeigevorrichtung der Mobilstation zuordnet.

21. Verfahren zum Überwachen von Verkehrsflüssen von Mobilfunknutzern, wobei das Verfahren aufweist:
Empfangen von Verkehrsberichtsdatenblöcken bzw. -tickets, welche aus Signalisierungs- bzw Zeichengabeaktivitäten eines Mobilkommunikationsnetzes erzeugt werden, in einem ersten Server (12), der mit dem Mobilkommunikationsnetz verbunden ist, wobei jedes Verkehrsberichtsticket eine Mehrzahl von Datenfeldern aufweist; **gekennzeichnet durch**
Empfangen (2-8) einer ersten Nachricht, welche ein Messkriterium aufweist, das eine von dem ersten Server angeforderte Information identifiziert, von dem zweiten Server;
Extrahieren (2-10, 2-11, 2-12) einer ersten Gruppe von Verkehrsberichtstickets aus den empfangenen Verkehrsberichtstickets gemäß dem Messkriterium in der ersten Nachricht in dem ersten Server;
Erzeugen (2-13) eines ersten Ergebnisses aus der ersten Gruppe von Verkehrstickets **durch** Manipulieren der Datenfelder, die eine Zuordnung eines Mobilfunknutzers zu einem spezifischen Verkehrsticket unbeabsichtigt erleichtern, in wenigstens der ersten Gruppe von Verkehrstickets.

22. Verfahren gemäß Anspruch 21, **gekennzeichnet durch** Empfangen (2-2) einer Anforderungsnachricht, die ein von dem zweiten Server aus angefordertes Ergebnis identifiziert, von einem externen Client;
Erzeugen (2-7) der ersten Nachricht aus der Anforderungsnachricht;
Empfangen (2-14) des ersten Ergebnisses von dem ersten Server;
Erzeugen (2-15) eines zweiten Ergebnisses aus dem empfangenen ersten Ergebnis gemäß der Anforderung **durch** den externen Client.

23. Server (12) in einer Anordnung zur Überwachung von Verkehrsflüssen von Mobilfunknutzern, wobei der Server (12) mit einem Mobilkommunikationsnetz (10) verbunden ist, um Verkehrsberichtsdatenblöcke bzw. -tickets, welche aus Signalisierungs- bzw. Zeichengabeaktivitäten des Mobilkommunikationsnetzes erzeugt werden, zu empfangen wobei jedes Verkehrsberichtsticket eine Mehrzahl von Datenfeldern aufweist, und mit einem zweiten Server (15) verbunden ist; und **dadurch gekennzeichnet ist, dass** er konfiguriert ist, um
eine erste Nachricht, welche ein Messkriterium aufweist, das eine von dem zweiten Server (15) angeforderte Information identifiziert, zu empfangen (2-8);
aus den empfangenen Verkehrsberichtstickets eine erste Gruppe von Verkehrsberichtstickets gemäß dem Messkriterium in der ersten Nachricht zu extrahieren (2-10, 2-11, 2-12); und
aus der ersten Gruppe von Verkehrstickets durch Verarbeiten der Datenfelder, die eine Zuordnung eines Mobilfunknutzers zu einem spezifischen Verkehrsticket unbeabsichtigt erleichtern, in wenigstens der ersten Gruppe von Verkehrstickets ein erstes Ergebnis zu erzeugen (2-13).

24. Server (15) in einer Anordnung zur Überwachung von Verkehrsflüssen von Mobilfunknutzern, wobei der Server (15) mit einem zum Empfangen von aus Signalisierungs- bzw. Zeichengabeaktivitäten eines Mobilkommunikationsnetzes erzeugten Verkehrsberichtsdatenblökken bzw. -tickets mit dem Mobilkommunikationsnetz (10) verbundenen ersten Server (12) und einem externen Client (16) verbunden ist; **dadurch gekennzeichnet, dass** er konfiguriert ist, um
von dem externen Client (16) eine Anforderung, welche ein von dem Server (15) angefordertes Ergebnis identifiziert, zu empfangen (2-2);
aus der Anforderung eine erste Nachricht, welche ein Messkriterium enthält, das eine von dem ersten Server (12) angeforderte Information identifiziert, zu erzeugen (2-7) und die erste Nachricht an den ersten Server (12) zu senden (2-8);
von dem ersten Server (12) das erste Ergebnis zu empfangen (2-14), wobei Datenfelder, welche eine Zuordnung eines Mobilfunknutzers zu einem spezifischen Verkehrsticket unbeabsichtigt erleichtern, durch den ersten Server manipuliert worden sind;
aus dem empfangenen ersten Ergebnis ein zweites Ergebnis gemäß der Anforderung durch den externen Client (16) zu erzeugen (2-15);
das zweite Ergebnis an den externen Client (16) zu senden (2-16).

## Revendications

1. Agencement pour surveiller le flux de trafic des utilisateurs mobiles, comprenant :
un premier serveur (12) connecté à un réseau de communications mobiles en vue de recevoir des fiches de rapport sur le trafic, générées à partir des activités de signalisation du réseau de communications mobiles, chaque fiche de rapport sur le trafic comprenant une pluralité de champs de données ;
**caractérisé par**
un second serveur (15) connecté au premier serveur et configuré de manière à générer (2-7) un premier message comprenant un critère de mesure qui identifie l'information demandée au premier serveur, et à envoyer (2-8) ledit premier message au premier serveur ;
le premier serveur (12) étant configuré de manière à extraire (2-10, 2-11, 2-12), à partir des fiches de rapport sur le trafic reçues, un premier groupe de fiches de rapport sur le trafic selon le critère de mesure dans le premier message reçu à partir du second serveur (15) ;
le premier serveur (12) est configuré de manière à générer (2-13), à partir du premier groupe de fiches de rapport sur le trafic, un premier résultat en manipulant au moins dans ledit premier groupe de fiches de rapport sur le trafic les champs de données qui de manière non intentionnelle facilitent l'association d'un utilisateur mobile avec une fiche de rapport sur le trafic spécifique, et à envoyer (2-14) le premier résultat au second serveur (15).

2. Agencement selon la revendication 1,
**caractérisé en ce que**
le second serveur (15) comprend des moyens (84) en vue de fournir une connexion vers un client extérieur (16), et est configuré de manière à
recevoir (2-2) de la part du client extérieur (16) un message de demande qui identifie un résultat demandé au second serveur (15) ;
générer (2-7) à partir du message de demande ledit premier message ;
recevoir (2-14) à partir du premier serveur (12) le premier résultat ;
générer (2-15) à partir du premier résultat reçu un second résultat selon la demande du client extérieur (16) ;
envoyer (2-16) ledit second résultat au client extérieur (16).

3. Agencement selon la revendication 1,
**caractérisé en ce que**
le second serveur (15) est configuré de manière à inclure dans le premier message une valeur pour un champ de données qui correspond à un champ de données contenu dans les fiches de rapport sur le trafic, et
le premier (12) serveur est configuré de manière à extraire les fiches de rapport sur le trafic dans lesquelles une valeur du champ de données correspond à la valeur du champ de données contenu dans le premier message.

4. Agencement selon la revendication 1,
**caractérisé en ce que**
le second serveur (15) est configuré de manière à inclure dans un champ de données du premier message une condition indiquant des valeurs possibles d'un champ de données correspondant contenu dans les fiches de rapport sur le trafic ; et
le premier serveur (12) est configuré de manière à extraire les fiches de rapport sur le trafic dans lesquelles une valeur du champ de données satisfait à la condition dans le premier message.

5. Agencement selon la revendication 1,
**caractérisé en ce que**
l'agencement comprend en outre une base de données de mesure (17) connectée au second serveur (15), et le second serveur (15) est en outre configuré de manière à stocker (2-17) le premier résultat reçu dans la base de données de mesure (17).

6. Agencement selon la revendication 2,
**caractérisé en ce que**
l'agencement comprend en outre une base de données de mesure (17) connectée au second serveur (15), et le second serveur (15) est en outre configuré de manière à enregistrer le second message envoyé dans la base de données de mesure (17).

7. Agencement selon la revendication 1,
**caractérisé en ce que**
le premier serveur est configuré de manière à manipuler les champs de données qui de manière non intentionnelle facilitent l'association d'un utilisateur mobile avec une fiche de rapport sur le trafic spécifique en remplaçant un identificateur d'identité d'utilisateur permanent (MSISDN1) par un identificateur temporaire (TMP1) qui n'est valable que pour une période définie.

8. Agencement selon la revendication 7, dans lequel chacune des fiches de rapport sur le trafic comprend un champ de données portant l'estampille temporelle (t1, t2, ...) de l'activité de signalisation,
**caractérisé en ce que**
le premier serveur (12) est en outre configuré de manière à détecter des fiches de rapport sur le trafic manipulées comportant un identificateur temporaire (TMP1), à déterminer au moyen des estampilles temporelles (t1, t5) une différence de temps entre deux activités de signalisation, et à utiliser la différence de temps pour calculer la vitesse moyenne de la station mobile de cet identificateur temporaire.

9. Agencement selon la revendication 7, dans lequel chaque enregistrement du premier résultat comprend un champ de données portant l'estampille temporelle de l'activité de signalisation,
**caractérisé en ce que**
le second serveur (15) est en outre configuré de manière à détecter à partir du premier résultat reçu deux enregistrements liés à un identificateur temporaire (TMP1), à déterminer au moyen des estampilles temporelles (t1, t5) la différence de temps entre les activités de signalisation, et à utiliser les différences de temps en vue de calculer la vitesse moyenne de la station mobile de cet identificateur temporaire (TMP1).

10. Agencement selon la revendication 1,
**caractérisé en ce que**
le premier serveur (12) comprend des moyens (82, 83, 84) en vue d'ajuster les paramètres de cellule des cellules individuelles du système de communications mobile (10) ;
le premier serveur (12) est configuré de manière à déterminer à partir du premier message un besoin d'ajustement d'un paramètre de cellule d'une ou plusieurs cellules du système de communications mobile ; et
le premier serveur (12) est configuré de manière à ajuster un paramètre de cellule desdites une ou plusieurs cellules en réponse au besoin d'ajustement déterminé.

11. Agencement selon la revendication 10,
**caractérisé en ce que**
le premier serveur (12) est configuré de manière à ajuster le paramètre de cellule de la minuterie de la mise à jour d'emplacement.

12. Agencement selon la revendication 5 ou 6,
**caractérisé en ce que**
le second serveur (15) est configuré de manière à récupérer à partir de la base de données de mesure (17) un groupe d'enregistrements d'activités de signalisation liés à la détermination d'emplacement par les stations mobiles dans une cellule en vue de calculer le centre de masse probabiliste de la cellule.

13. Agencement selon la revendication 2,
**caractérisé en ce que**
l'agencement comprend en outre un troisième serveur (18) qui est connecté au second serveur (15) et au réseau de communications mobiles (10), et le premier serveur (12) est configuré de manière à ne pas manipuler les fiches de rapport sur le trafic des utilisateurs mobiles qui ont autorisé l'utilisation de leurs fiches de rapport sur le trafic générées à partir des activités de signalisation du réseau de communications mobiles (10), dans le troisième serveur.

14. Agencement selon la revendication 13,
**caractérisé en ce que**
le troisième serveur (18) est configuré de manière à demander au second serveur (15) un résultat comprenant un groupe d'enregistrements liés à un abonné, à déterminer à partir du résultat un point d'activation de service pour l'abonné, et à activer un service du réseau de communications mobiles (10) au niveau de ce point.

15. Agencement selon la revendication 14,
**caractérisé en ce que**
le point de service est un emplacement déterminé.

16. Agencement selon la revendication 14,
**caractérisé en ce que**
le point de service est un moment déterminé du jour.

17. Agencement selon la revendication 14,
**caractérisé en ce que**
le service est un service point à point.

18. Agencement selon la revendication 14,
**caractérisé en ce que**
le service est un service point à omnipoint, utilisant le canal radio de cellule (CBCH).

19. Agencement selon la revendication 18,
**caractérisé en ce que**
le service comprend l'envoi d'un message, et le troisième serveur (18) est configuré de manière à chiffrer le message avant de l'envoyer.

20. Agencement selon la revendication 2,
**caractérisé en ce que**
l'agencement comprend en outre un troisième serveur (18) connecté au second serveur (15) et au réseau de communications mobiles (10) ;
ledit troisième serveur (18) est configuré de manière à générer à partir du second résultat un message vers un utilisateur mobile portant une station mobile avec un appareil d'affichage, ledit message comprenant un ou plusieurs éléments de données ; et
ledit troisième serveur (18) est en outre configuré de manière à inclure dans lesdits un ou plusieurs éléments de données une coordonnée qui associe l'élément de données avec un emplacement sur l'appareil d'affichage de la station mobile.

21. Méthode de surveillance du flux de trafic des utilisateurs mobiles, comprenant
la réception des fiches de rapport sur le trafic générées à partir des activités de signalisation d'un réseau de communications mobiles dans un premier serveur (12) connecté à un réseau de communications mobiles, chaque fiche de rapport sur le trafic comprenant une pluralité de champs de données ;
**caractérisée par**
la réception (2-8) à partir du second serveur d'un premier message comprenant un critère de mesure qui identifie l'information qui est demandée au premier serveur (12) ;
l'extraction (2-10, 2-11, 2-12) dans le premier serveur à partir des fiches de rapport sur le trafic d'un premier groupe de fiches de rapport sur le trafic selon le critère de mesure contenu dans le premier message ;
la génération (2-13) à partir du premier groupe de fiches de trafic d'un premier résultat en manipulant dans au moins ledit premier groupe de fiches de trafic les champs de données qui de manière non intentionnelle facilitent l'association d'un utilisateur mobile avec une fiche de trafic spécifique.

22. Méthode selon la revendication 21,
**caractérisée par**
la réception (2-2) de la part d'un client extérieur (16) d'un message de demande qui identifie un résultat demandé au second serveur ;
la génération (2-7) à partir du message de demande dudit premier message ;
la réception (2-14) à partir du premier serveur du premier résultat ;
la génération (2-15) à partir du premier résultat reçu d'un second résultat selon la demande du client extérieur.

23. Serveur (12) dans un agencement pour surveiller le flux de trafic des utilisateurs mobiles, ledit serveur (12) étant connecté à un réseau de communications mobiles (10) en vue de recevoir des fiches de rapport sur le trafic générées à partir des activités de signalisation du réseau de communications mobiles, chaque fiche de rapport sur le trafic comprenant une pluralité de champs de données, et à un second serveur (15) ;
**caractérisé par** le fait d'être configuré de manière à
recevoir (2-8) un premier message comprenant un critère de mesure qui identifie l'information demandée par le second serveur (15) ;
extraire (2-10, 2-11, 2-12) à partir des fiches de rapport sur le trafic reçues un premier groupe de fiches de rapport sur le trafic selon le critère de mesure contenu dans le premier message ; et
générer (2-13) à partir du premier groupe de fiches de trafic un premier résultat en manipulant au moins dans ledit premier groupe de fiches de trafic les champs de données qui de manière non intentionnelle facilitent l'association d'un utilisateur mobile avec une fiche de trafic spécifique.

24. Serveur (15) dans un agencement pour surveiller le flux de trafic des utilisateurs mobiles, ledit serveur (15) étant connecté à un premier serveur (12) qui est connecté à un réseau de communications mobiles (10) en vue de recevoir des fiches de rapport de trafic générées à partir des activités de signalisation du réseau de communications mobiles, et à un client extérieur, et
**caractérisé par** le fait d'être configuré de manière à
recevoir (2-2) de la part du client extérieur (16) une demande qui identifie un résultat demandé au serveur (15) ;
générer (2-7) à partir de la demande un premier message comprenant un critère de mesure qui identifie l'information demandée au premier serveur (12), et envoyer (2-8) ledit premier message au premier serveur (12) ;
recevoir (2-14) à partir du premier serveur (12) le premier résultat dans lequel des champs de données qui de manière non intentionnelle facilitent l'association d'un utilisateur mobile avec une fiche de trafic spécifique, ont été manipulées par le premier serveur ;
générer (2-15) à partir du premier résultat reçu un second résultat selon la demande du client extérieur (16) ;
envoyer (2-16) ledit second résultat au client extérieur (16).
